# EUROPÄISCHE PATENTSCHRIFT

(11) **EP 1 127 767 B1**
(45) Veröffentlichungstag und Bekanntmachung des Hinweises auf die Patenterteilung: **09.04.2003**
(21) Anmeldenummer: 01103301.6
(22) Anmeldetag: 13.02.2001
(51) Int. Cl.: B61D 27/00, B60H 1/00

(54) **Klimatisierungsvorrichtung und Verfahren zum Betrieb dieser**
Air-conditionning device and method for operating the same
Dispositif de conditionnement d'air et procédé pour son fonctionnement

(30) Priorität: 23.02.2000 DE 10008250
(43) Veröffentlichungstag der Anmeldung: 29.08.2001
(73) Patentinhaber: Behr Industrietechnik GmbH & Co., 70469 Stuttgart (DE)
(72) Erfinder: Schwärzler, Hans-Christoph, 70469 Stuttgart (DE); Prange, Manfred, 71254 Ditzingen (DE)
(74) Vertreter: Riedel, Peter

(56) Entgegenhaltungen:
- EP-A- 0 962 374
- DE-A- 19 625 925
- US-A- 2 513 679
- US-A- 4 788 487
- US-A- 4 843 826

## Beschreibung

Die Erfindung betrifft eine Klimatisierungsvorrichtung und ein Verfahren zum Betrieb einer Klimatisierungsvorrichtung, insbesondere zur Klimatisierung von Fahrgasträumen in einem Schienenfahrzeug, nach dem Oberbegriff des Patentanspruchs 1.

Für die Klimatisierung von Räumen, insbesondere von Fahrgasträumen von Schienenfahrzeugen existieren Klimatisierungsvorrichtungen, die entweder zentral angeordnet sind und am Ort für die Lufttemperierung, Entfeuchtung und Reinigung sorgen oder dezentrale Klimatisierungsvorrichtungen.

DE 198 24 461 beschreibt ein Klimatisierungsmodul mit einem geschlossenen, elektrisch betreibbaren Kältemittelkreislauf. Das Klimatisierungsmodul kann so ausgelegt sein, daß es ausschließlich für Sommerbetrieb zur Kühlung oder mit einer Heizvorrichtung für den Winterbetrieb einsetzbar ist. Zudem ist bei stillgelegtem Kältemittelkreislauf ein Lüftungsbetrieb darstellbar. Aufgrund der vielfältigen möglichen Betriebsweisen ist die fluidische Koppelung solcher Klimatisierungsmodule mit ihrer Umgebung komplex und nur für bestimmte Wagenausstattungen von Schienenfahrzeugen geeignet.

Zu Wartungszwecken müssen mit solchen Klimatisierungsmodulen ausgestattete Wagen in speziellen Wartungsbetrieben gewartet werden.

Der Erfindung liegt daher die Aufgabe zugrunde, eine Klimatisierungsvorrichtung zu schaffen, die einen bedarfsgesteuerten Betrieb bei hoher Verfügbarkeit ermöglicht.

Diese Aufgabe wird durch eine Klimatisierungsvorrichtung mit den Merkmalen des Anspruchs 1 gelöst.

Vorteilhaft ist eine Klimatisierungsvorrichtung, insbesondere zur Klimatisierung von Fahrgasträumen eines Schienenfahrzeugs, wie etwa eines Eisenbahnwagens oder eines Führerstands einer Lokomotive aus einer modular aufgebauten, fahrzeugfesten Energieversorgung und Regelungsvorrichtung und einer Gruppe mit mehreren Klimatisierungsmodulen gebildet. Vorteilhaft sind die Klimatisierungsmodule mit einem in einem Gehäuse untergebrachten, elektrisch betreibbaren Kältemittelkreislauf bestehend aus einem elektrisch antreibbaren Kompressor, einem Verdampfer und einem Verflüssiger gebildet und in einer Haltevorrichtung austauschbar angeordnet. Die Gehäusewände eines Klimatisierungsmoduls sind mit einer elektrischen Anschlußvorrichtung oder Steckverbindung zur Stromversorgung versehen. Die Gehäusewände sind mit Wandöffnungen zur Luftführung von Außen- und/oder Umluft und zur Abfuhr von klimatisierter Zuluft zu den Fahrgasträumen versehen.

Die Klimatisierungsmodule sind fluidisch in bezug auf die Luftführungskanäle von Außen und/oder Umluft und Zuluft parallel angeordnet, wobei die Wandöffnungen für die Klimaluft der Klimatisierungsmodule an einer einzigen Gehäusewand angeordnet sind und mit Verbindungsöffnungen der Luftführungskanäle dichtend verbunden sind. Die Klimatisierungsmodule sind mit ihrem Gehäuse in einer Vorrichtung der Haltevorrichtung im Betrieb formschlüssig gehalten und alle Verbindungsöffnungen sind mit den Wandöffnungen dichtend verbunden. Vorteilhaft sind die Klimatisierungsmodule in der im wesentlichen aus Gleitschienen gebildeten Vorrichtung geführt. Zumindest an einer Seite der Haltevorrichtung ist in Richtung der Gleitschienen eine schwenkbare Montageklappe angeordnet. Auf der der Haltevorrichtung zugewandten Seite der Montageklappe sind Gleitschienen parallel im Abstand zueinander angeordnet. Die Gleitschienen an der Montageklappe dienen im aufgeklappten Zustand dieser zum Einschieben eines Klimatisierungsmoduls in die Haltevorrichtung und bilden im wesentlichen die Vorrichtung. Nach dem Schließen der Montageklappe ist das jeweilige Klimatisierungsmodul in seiner betriebsfähigen Lage gehalten und verriegelt.

In einer bevorzugten Anordnung sind je nach Auslegungsspezifikationen die Klimatisierungsmodule unterflur eines Eisenbahnwagens in Gruppen von sechs bis acht Stück angeordnet. Es kann in Abhängigkeit von dem an einem Schienenfahrzeug vorhandenen freien Bauraum auch zweckmäßig sein, die Klimatisierungsmodule an den Wagenenden eines Eisenbahnwagens unter dessen Dach oder auf dem Dach anzubringen. Die Klimatisierungsmodule lassen sich gleichwohl in einem Wandschrank übereinander anordnen.

Die Luftzufuhr zu den Klimatisierungsmodulen erfolgt zweckmäßig über einen als Sammelkanal ausgeführten Mischluftkanal. Die Summe aller Klimatisierungsmodule einer Klimatisierungsvorrichtung sind zweckmäßig an dem Sammel- oder Mischluftkanal angeordnet und von diesem mit einem Gemisch aus Außenluft und Umluft versorgt. Die Klimatisierungsmodule sind außerdem vorzugsweise an einem gemeinsamen Zuluftkanal zur Führung klimatisierter Luft in die Fahrgasträume angeordnet und mit diesem fluidisch verbunden. Zu diesem Zweck sind die Wandöffnungen für die Klimaluft der Gehäuse der Klimatisierungsmodule an einer einzigen Gehäusewand angeordnet. Dadurch sind die Klimatisierungsmodule besonders einfach an die Sammelkanäle für Zuluft und Außen/Umluft ankoppelbar. Zur Filterung der Mischluft vor deren Eintritt in die Klimatisierungsmodule ist im Mischluftkanal ein schnell tauschbares Filter eingelegt. Es kann auch zweckmäßig sein, jedem Klimatisierungsmodul ein separates Filter an dessen Wandöffnung für Mischluft zuzuordnen.

Zur Abdichtung der Wandöffnung für Zuluft ist an den Klimatisierungsmodulen eine Rückschlagklappe angebracht, um die Wandöffnung bei abgeschalteten Gebläse des Klimatisierungsmoduls, beispielsweise bei Teillastbetrieb der Klimatisierungsvorrichtung, zu verschließen, um somit Rückströmungen zu unterbinden. Die Verflüssiger der Klimatisierungsmodule werden über seitliche Eintrittsgitter mit Außenluft gespeist. Die Verflüssigerluftaustritte sind vorzugsweise im Boden der Klimatisierungsmodule angeordnet. Bei einer im Eisenbahnwagen eingebauten Klimatisierungsvorrichtung erfolgt ein freies Ausblasen der Verflüssigerluft auf das Gleisbett.

Das am Verdampfer anfallende Kondenswasser wird über einen Kondenswasserablauf abgeleitet. Zur Verbesserung der Verfügbarkeit der Klimatisierungsvorrichtung und für einen bedarfsgerechten Betrieb der Klimatisierungsvorrichtung ist die fahrzeugfest installierte Energieversorgung der Klimatisierungsvorrichtung modular aufgebaut und besteht im wesentlichen aus einem Hochspannungsteil und mehreren Umrichtern. Durch je einen Umrichter ist jeweils ein Klimatisierungsmodul oder mehrere, beispielsweise bis zu vier Klimatisierungsmodule über eine elektrische Anschlußverbindung gespeist. Die elektrische Anschlußverbindung ist als Stecker-Buchsenanordnung ausgeführt. Die Regelungsvorrichtung wird im wesentlichen durch eine Bedieneinheit und mehrere Regler gebildet. Die Klimatisierungsvorrichtung wird von der Regelungsvorrichtung derart betrieben, daß die Betriebsstundenzahl aller Klimatisierungsmodule einer Klimatisierungsvorrichtung untereinander ausgeglichen wird, die Klimatisierungsmodule werden also selektiv betrieben. Durch diese konstruktive Maßnahme ist es gewährleistet, daß bei Teillastbetrieb in wechselnder Weise Klimatisierungsmodule zu und abgeschaltet werden.

Bei einer Störung eines Reglers oder der Bedieneinheit kann ein Notklimatisierungsbetrieb, d. h. ein forcierter Betrieb, aber unter Einhaltung der Sicherheitsfunktionen aufrecht erhalten bleiben. Durch die Klimatisierung der Raumluft aus mehreren Klimatisierungsmodulen kleiner Leistung, insbesondere 2 kW bis 10 kW Kälteleistung, ist ein hohes Maß an Redundanz und ein flexibles Einbaukonzept bei unterschiedlichen Eisenbahnwagentypen oder bei unterschiedlichen Raumangeboten etwa im Einsatz bei industrieller Prozeßklimatisierung möglich. Bedarfsnahe Spitzenlast und Reservekapazitäten werden nur bedarfsgesteuert in Betrieb gesetzt. Der Verschleiß der Klimatisierungsmodule ist dadurch vermindert und die Verfügbarkeit der Klimatisierungsvorrichtung erhöht. Bei notwendigen Wartungsarbeiten an den Klimatisierungsmodulen sind die Klimatisierungsmodule auf einfache Art in kürzester Zeit austauschbar, ohne daß es notwendig ist den betroffenen Eisenbahnwagen in einen Wartungsbetrieb zu verbringen.

Ausführungsbeispiele sind nachstehend anhand der Zeichnungen näher erläutert.

In der Zeichnung zeigt:
- Fig. 1: einen schematischen Aufbau einer Klimatisierungsvorrichtung,
- Fig. 2: eine schematische Seitenansicht einer Haltevorrichtung mit zwei Klimatisierungsmodulen,
- Fig. 3: eine schematische Seitenansicht einer Haltevorrichtung mit geöffneter Montageklappe,
- Fig. 4: eine Seitenansicht eines Eisenbahnwagens mit sechs Klimatisierungsmodulen unter dem Boden des Eisenbahnwagens,
- Fig. 5: eine Seitenansicht einer Klimatisierungsvorrichtung mit acht Klimatisierungsmodulen,
- Fig. 6: eine schematische Seitenansicht eines Eisenbahnwagens mit einer Klimatisierungsvorrichtung unter dem Dach,
- Fig. 7: einen Schnitt und eine Seitenansicht eines Wagenendes eines Eisenbahnwagens mit Klimatisierungsmodulen unter dem Dach,
- Fig. 8: eine Seitenansicht eines Eisenbahnwagens mit Klimatisierungsmodulen auf dem Dach,
- Fig. 9: eine schematische Seitenansicht eines Eisenbahnwagens mit in Wandschränken übereinander gestapelten Klimatisierungsmodulen,
- Fig. 10: einen Querschnitt durch ein Wagenende entlang der Linie X-X in Fig. 9
- Fig. 11: eine Ansicht des Wagenendes in Fig. 10 ohne Wagendach,
- Fig. 12: ein Blockschaltbild einer Energieversorgung und Regelung von sechs Klimatisierungsmodulen.

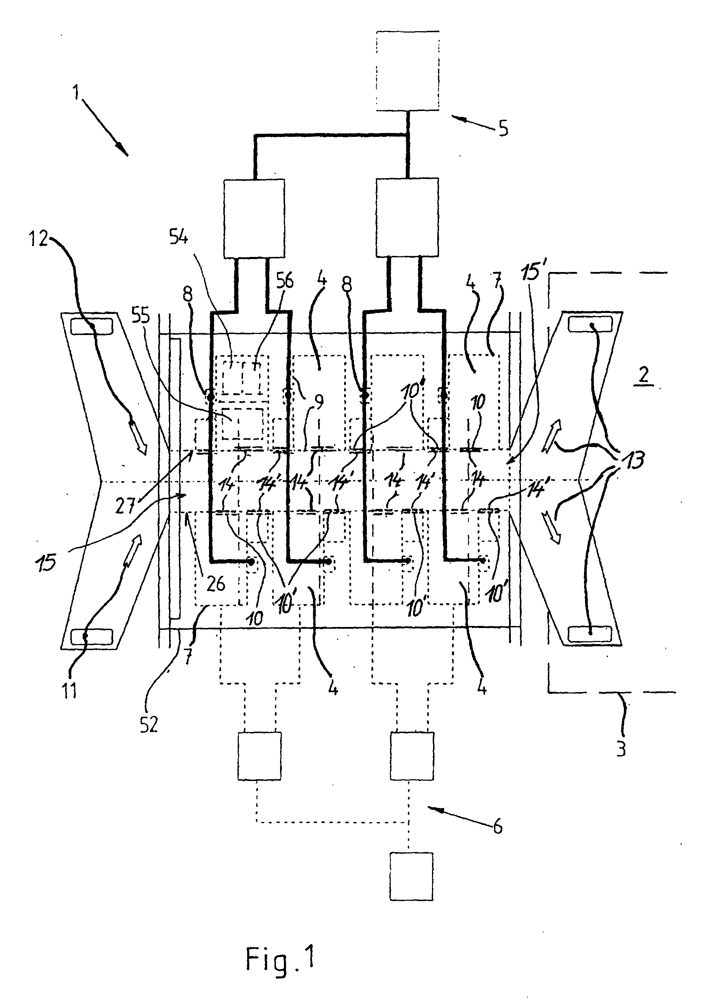

In Fig. 1 ist ein schematischer Aufbau einer Klimatisierungsvorrichtung 1 zur Klimatisierung eines Fahrgastraumes 2 eines schematisch dargestellten Schienenfahrzeuges 3 gezeigt. Jeweils vier Klimatisierungsmodule 4 sind auf gegenüberliegenden Seiten 26, 27 eines Luftführungskanals 15 angeordnet. Die Klimatisierungsmodule 4 sind an eine fahrzeugseitige Energieversorgung 5 angeschlossen und mit einer Regelungsvorrichtung 6 verbunden. Die Klimatisierungsmodule 4 umfassen im wesentlichen einen Kältemittelkreislauf mit elektrisch antreibbarem Kompressor 54, einen Verdampfer 55 und Verflüssiger 56 sowie in der Zeichnung nicht dargestellte Drosseleinrichtung, vorzugsweise in Form eines Expansionsventils, Filtertrockner und Gebläse, wobei alle Komponenten des Kältemittelkreislaufs in einem, im wesentlichen quaderförmigen Gehäuse 7 untergebracht sind.

Den Klimatisierungsmodulen 4 ist Umluft 12 und Außenluft 11 zugeführt und klimatisierte Luft 13 wird von den Klimatisierungsmodulen abgeführt und in den Fahrgastraum 2 geleitet. An einer Gehäusewand 9 jeden Klimatisierungsmoduls 4 sind elektrische Anschlußvorrichtungen 8 zum Anschluß eines jeweiligen elektrischen Gerätesteckers angeordnet. In einer dem Luftführungskanal 15 zugewandten Gehäusewand 9 sind je Klimatisierungsmodul zwei Wandöffnungen 10, 10' zur Zufuhr von Außen- und oder Umluft 11, 12 in das Klimatisierungsmodul 4 und zur Abfuhr von Zuluft 13 aus dem Klimatisierungsmodul 4 angeordnet. Die Wandöffnungen 10, 10' liegen deckungsgleich an Verbindungsöffnungen 14, 14' der Luftführungskanäle 15 an und sind mit den Luftführungskanälen fluidisch verbunden. Die Klimatisierungsmodule 4 sind vorzugsweise mit einer Kälteleistung bis 10 kW dimensioniert und in einer Haltevorrichtung 52 gehalten.

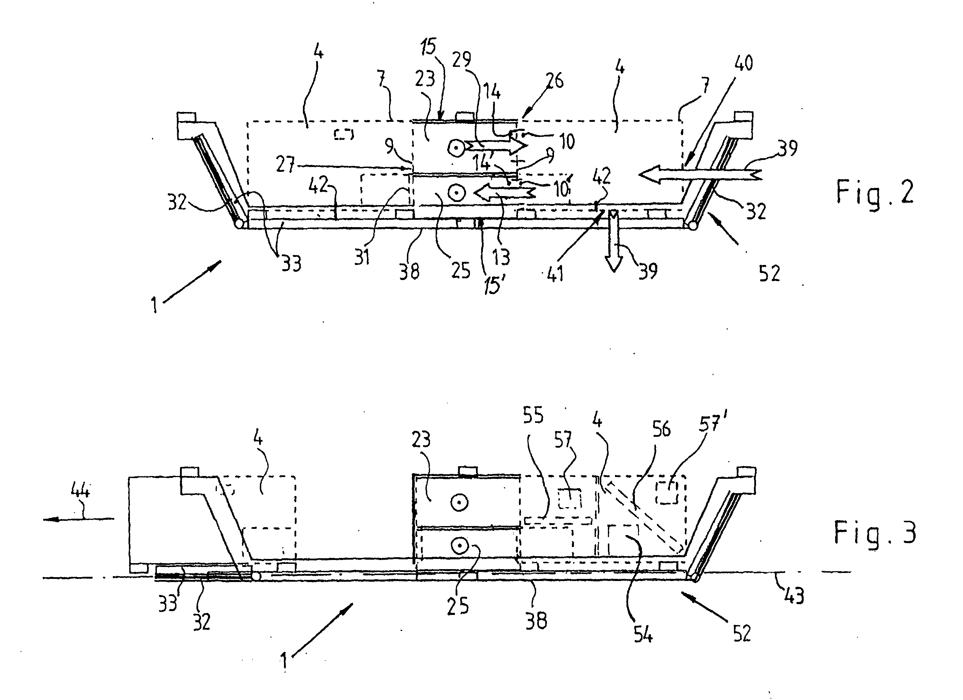

Fig. 2 zeigt eine schematische Seitenansicht der Haltevorrichtung 52 mit zwei sich gegenüberliegenden Klimatisierungsmodulen 4. Die Haltevorrichtung 52 trägt an ihrem Boden 38 und an zwei Montageklappen 32, welche die Seitenwände der Haltevorrichtung 52 bilden, Gleitschienen 33. Auf den Gleitschienen 33 sind die Klimatisierungsmodule 4 geführt. Die die Haltevorrichtung 52 seitlich begrenzenden Montageklappen 3.2 fixieren in der in Fig. 2 gezeigten Verschlußposition dieser die Klimatisierungsmodule 4. Die beiden Klimatisierungsmodule sind auf gegenüberliegenden Seiten 26, 27 von als je einem Sammelkanal ausgebildeten Mischluftkanal 23 und Zuluftkanal 25 angeordnet. In den einander zugewandten Gehäusewänden 9 der quaderförmigen Gehäuse 7 der Klimatisierungsmodule 4 sind an jedem Klimatisierungsmodul 4 zwei Wandöffnungen 10, 10' angeordnet. Deckungsgleich zu den Wandöffnungen 10, 10' der Gehäusewände 9 sind in die Sammelkanäle Verbindungsöffnungen 14, 14' eingebracht. Aus dem in dem gezeigten Ausführungsbeispiel über dem Zuluftkanal 25 liegenden Mischluftkanal 23 tritt Mischluft 29 bestehend aus Außenluft und Umluft in die Klimatisierungsmodule 4 ein und Zuluft 13 in den Zuluftkanal 25 aus. Dies erfolgt über die im Betriebszustand der Klimatisierungsvorrichtung 1 jeweils dichtend aufeinanderliegenden Wandöffnungen 10, 10' und Verbindungsöffnungen 14, 14'.

Die Mischluft 29 wird im Gehäuse 7 durch ein erstes Gebläse 57 über den Verdampfer 55 geführt und verläßt als Zuluft 13 das Klimatisierungsmodul 4, wie dies in Fig. 3 dargestellt ist. Zur Vermeidung von Fehlströmen bei abgeschaltetem Klimatisierungsmodul 4 sind an jeder Verbindungsöffnung 14 des Zuluftkanals 25 Rückschlagklappen 31 angebracht. Die Rückschlagklappen 31 verschließen die Wandöffnungen 10' in diesem Betriebszustand. In dem gezeigten Ausführungsbeispiel sind die Montageklappen 32 gitterförmig ausgebildet und ermöglichen den Eintritt von Verflüssigerluft 39 an einer den Wandöffnungen 10, 10' gegenüberliegenden Gehäusewand des Gehäuses 7. Zur Erzeugung eines Luftstroms zur Beaufschlagung des Verflüssigers 56 ist ein zweites Gebläse 57' vorgesehen, Der Austritt 41 der Verflüssigerluft des Klimatisierungsmoduls 4 erfolgt auf der dem Boden 38 der Haltevorrichtung 52 zugewandten Gehäuseseite des Klimatisierungsmoduls 4. Ein Kondenswasserablauf 42 eines jeden Klimatisierungsmoduls 4 ist auf derselben Gehäusewand angeordnet, wie der Austritt 41 der Verflüssigerluft.

Fig. 3 zeigt eine Seitenansicht der Haltevorrichtung 52 in Fig. 2 mit geöffneter Montageklappe 32. Für gleiche Bauteile gelten die selben Bezugszeichen wie in Fig. 2. Die geöffnete Montageklappe 32 ist von der Haltevorrichtung 52 abgeklappt und in Richtung der Längsachse 43 des Bodens 38 der Haltevorrichtung 52 ausgerichtet. Die Gleitschienen 33 auf der Montageklappe 32 führen in dem gezeigten Ausführungsbeispiel bei der gezeigten Parallelverschiebung in Ausbaurichtung 44 des Klimatisierungsmoduls 4 von dem Mischluftkanal 23 und Zuluftkanal 25 weg. Die in den Fig. 2 und 3 gezeigte Haltevorrichtung ist vorzugsweise bei der Anordnung der Klimatisierungsvorrichtung 1 unterflur an einem Eisenbahnwagen vorgesehen. Defekte Klimatisierungsmodule lassen sich so besonders einfach durch öffnen der jeweiligen Montageklappe und Herausziehen der Klimatisierungsmodule 4 austauschen.

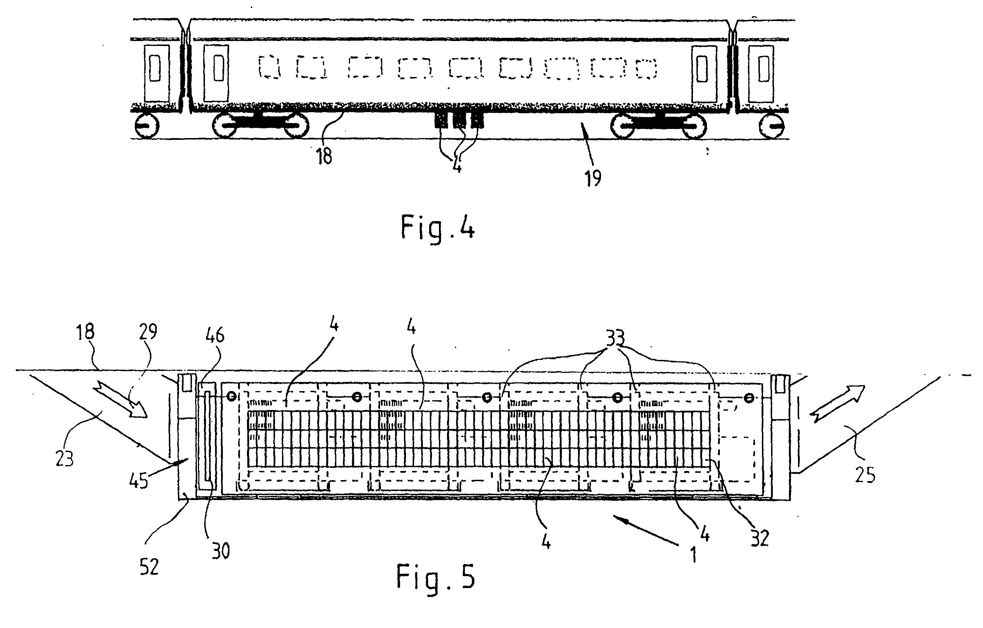

Fig. 4 zeigt eine Seitenansicht eines Eisenbahnwagens 19 mit sechs Klimatisierungsmodulen 4 unter dem Boden 18 des Wagens. Die Klimatisierungsmodule 4 sind vorzugsweise in der Mitte des Eisenbahnwagens 19 an gut zugänglicher Stelle aufgehängt.

Fig. 5 zeigt eine Seitenansicht einer Klimatisierungsvorrichtung 1 in dieser Ansicht vier sichtbaren Klimatisierungsmodulen 4 unter dem Boden 18 eines Eisenbahnwagens. Die Klimatisierungsmodule 4 sind entlang der Sammelkanäle von Mischluft 23 und Zuluft 25 angeordnet. Zum Eintritt von Verflüssigerluft in die Klimatisierungsmodule 4 ist die Montageklappe 32 als durchgehende Gitterkonstruktion über die Länge der Haltevorrichtung 52 ausgebildet. Auf ihrer, den Klimatisierungsmodulen 4 zugewandten Seite ist die Montageklappe 32 mit parallel und mit Abstand zueinander verlaufenden Gleitschienen 33 versehen. Ein Luftfilter 30 ist am Eintritt 45 der Mischluft 29 in einer schlitzförmigen Führung 46 quer zum Mischluftkanal 23 gehalten und geführt. Durch diese konstruktive Maßnahme ist es möglich, besonders schnell einen Luftfilterwechsel durchzuführen.

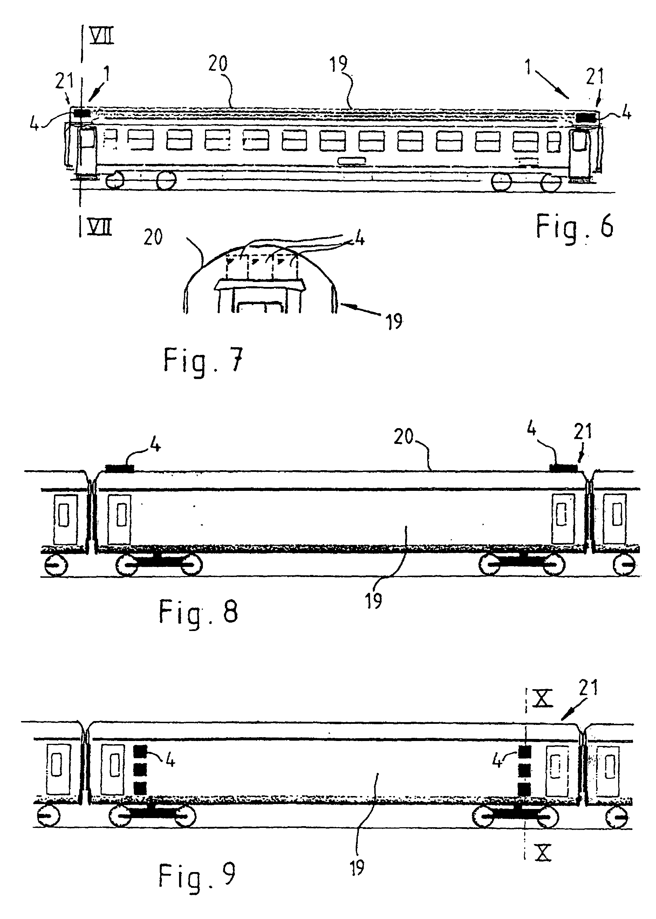

Fig. 6 zeigt eine schematische Seitenansicht eines Eisenbahnwagens 19 bei dem an den Wagenenden 21 jeweils eine Klimatisierungsvorrichtung 1 aus drei Klimatisierungsmodulen 4 unter dem Dach 20 des Eisenbahnwagens 19 angeordnet ist.

Fig. 7 verdeutlicht diese Anordnung anhand eines Querschnitts entlang der Linie VII-VII in Fig. 6. Die Klimatisierungsmodule 4 erstrecken sich mit ihrer Längsachse in Längsrichtung des Eisenbahnwagens 19 und sind im Eingangsbereich des Eisenbahnwagens 19 angeordnet und können dort zu Wartungszwecken leicht ausgetauscht werden.

Fig. 8 zeigt eine. Seitenansicht eines Eisenbahnwagens 19 mit Klimatisierungsmodulen 4 auf dem Dach 20 an den Wagenenden 21 angeordnet.

Fig. 9 zeigt die Anordnung der Klimatisierungsmodule 4 in Gruppen zu je drei Stück übereinandergestapelt an den Wagenenden 21 des Eisenbahnwagens 19.

Die unterschiedlichen Unterbringungsmöglichkeiten der Klimatisierungsmodule 4 in oder an dem Eisenbahnwagen 19 verdeutlichen, daß die erfindungsgemäße Klimatisierungsvorrichtung auch besonders geeignet zum nachträglichen Einbau in vorhandene Schienenfahrzeuge ist.

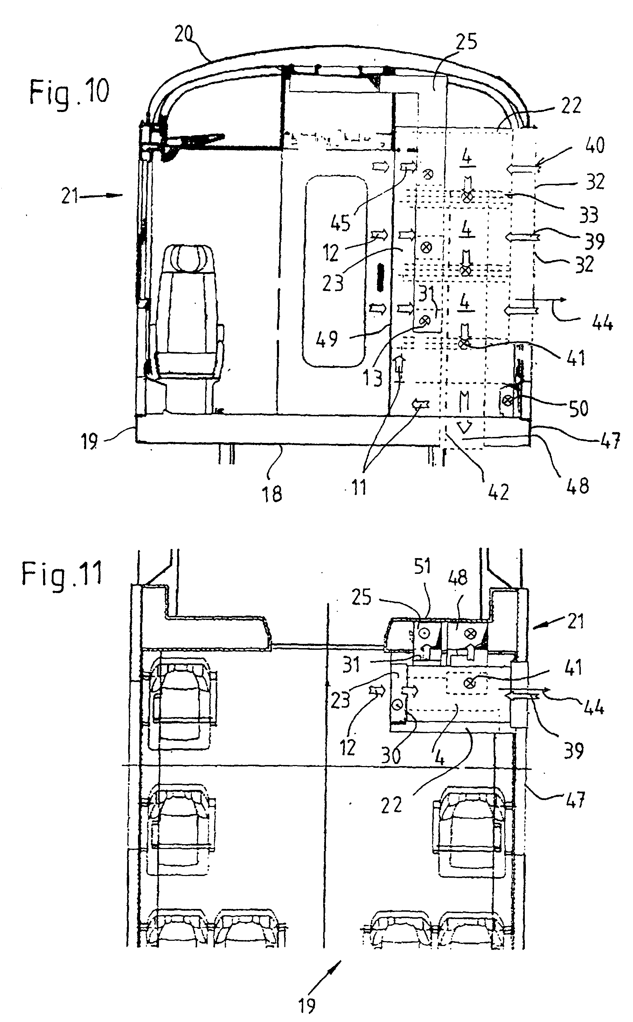

Fig. 10 zeigt einen Querschnitt durch das Wagenende 21 entlang der Linie X-X in Fig. 9. Drei Klimatisierungsmodule 4 sind in diesem Ausführungsbeispiel in einen Wandschrank 22 übereinander angeordnet. Der Wandschrank 22 ist in drei Einschubfächer getrennt, an deren Boden sich parallel und mit Abstand Gleitschienen 33 erstrecken. Die Montageklappen 32 schließen mit der Seitenwand 47 des Eisenbahnwagens 19 bündig ab und lassen sich nach außen ausklappen. Die Klimatisierungsmodule 4 sind dadurch auf Gleitschienen 33 an den Montageklappen 32 und an den Böden der Einschubfächer bewegbar und von außerhalb des Eisenbahnwagens in Ausbaurichtung 44 aus- und einzuschieben. Alternativ zur Darstellung in Fig. 10 können die Montageklappen innen vorgesehen sein, so daß die Montage bzw. Demontage der Klimatisierungsmodule im Innenraum des Eisenbahnwagens erfolgt. Die Modulorientierung kann im Prinzip beibehalten werden.

Über die Montageklappen 32 gelangt Verflüssigerluft 39 an Eintrittsöffnungen 40 in horizontaler Richtung in die jeweiligen Klimatisierungsmodule 4 und tritt über einen vertikal sich entlang der Klimatisierungsmodule 4 erstreckenden Sammelkanal 48 am Boden 18 oder Dach 20 des Eisenbahnwagens 19 wieder aus. Benachbart zu dem Sammelkanal 48 der Verflüssigerluft 39 durchragt ein Kondenswasserablauf 42 den Boden 18 des Eisenbahnwagens 19. Das Kondenswasser gelangt so auf das Gleisbett. Die Umluft 12 wird vom Wageninneren in einen vertikal verlaufenden, im wesentlichen über die gesamte Stapelhöhe der Klimatisierungsmodule sich erstreckenden Mischluftkanal 23 den Klimatisierungsmodulen 4 zugeführt. Die Umluft 12 wird dabei über die Höhe des Mischluftkanals 23 angesaugt und passiert vor deren Eintritt in den Mischluftkanal entsprechende Luftfilter, um dann an den als Mischlufteintritt 45 fungierenden Wandöffnungen der Klimatisierungsmodule in diese einzutreten. Die Außenluft 11 gelangt über einen Außenlufteintritt 50 an der Seitenwand 47 in der Nähe des Bodens 18 des Eisenbahnwagens 19 in den Mischluftkanal 23. über einen sich parallel benachbart zum Mischluftkanal 23 erstreckenden und unter dem Dach 20 des Eisenbahnwagens 19 geführten Zuluftkanal 25 gelangt die Zuluft 13 in das Wageninnere. Die Luftfilter zur Filterung der Umgebungsluft 12 sind hinter Filterrevisionsklappen 49 am Mischluftkanal 23 gehalten. Nach dem öffnen der Filterrevisionsklappen 49 vom Wageninneren aus, lassen sich die Luftfilter rasch wechseln.

Fig. 11 zeigt eine Ansicht des Wagenendes 21 des Eisenbahnwagens 19 in Fig. 10 von oben ohne Wagendach. Der Wandschränk 22 zur Aufnahme von Klimatisierungsmodulen 4 hat etwa einen rechteckförmigen Grundriß und ist in einer Ecke des Wagenendes 21 angeordnet. Die Ausbaurichtung 44 der Klimatisierungsmodule 4 ist dabei senkrecht zu der Wagenseiten oder Außenwand 47. Bei innen liegender Montageöffnung ist die Ausbaurichtung natürlich entgegengesetzt. Umgekehrt zu der Ausbaurichtung 44 ist die Verflüssigerluft 39 zu den Klimatisierungsmodulen 4 geführt. Der Austritt 41 der Verflüssigerluft 39 erfolgt jeweils über den Boden eines jeden Klimatisierungsmoduls 4 und wird über den Sammelkanal 48 für Verflüssigerluft zum Wagenboden oder Dach hin abgeführt (vgl. Fig. 10). Der Sammelkanal 48 verläuft zwischen einer Stirnwand 51 des Wagenendes 21 in vertikaler Richtung. Neben dem Sammelkanal 48 ist der vertikale Abschnitt des Zuluftkanals 25 geführt. Zwischen jedem Klimatisierungsmodul 4 und dem Zuluftkanal 25 ist eine Rückschlagklappe 31 (vergleiche auch Fig. 10) angeordnet, deren Funktion bereits beschrieben ist. Zwischen dem Mischluftkanal 23 und den Klimatisierungsmodulen ist jeweils ein Filter 30 zur Filterung der in die Klimatisierungsmodule 4 eintretende Umluft 12 angeordnet. Das Filter 30 kann über Filterrevisionsklappen 49 vom Wageninneren rasch gewechselt werden.

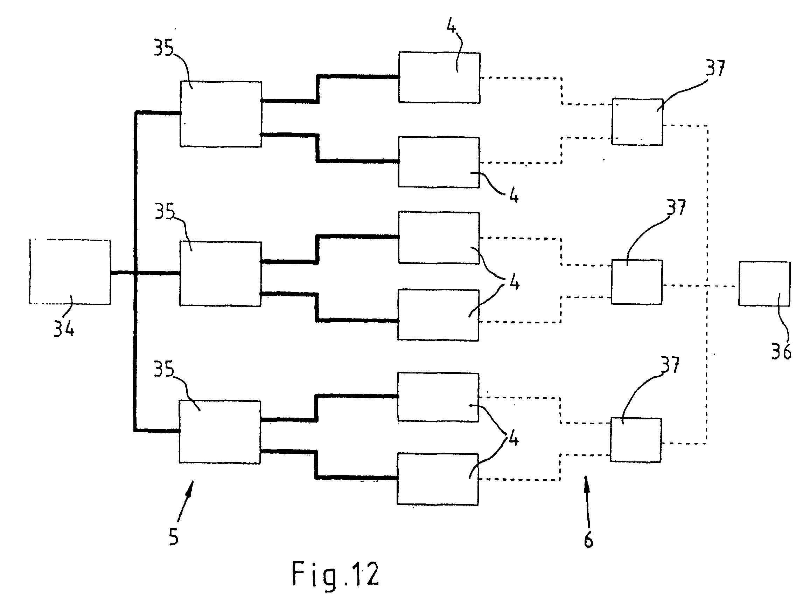

Fig. 12 zeigt ein Blockschaltbild einer Energieversorgung 5 und einer Regelungsvorrichtung 6 für sechs Klimatisierungsmodule 4. Die Energieversorgung 5 ist modular aufgebaut und aus einem vorzugsweise ortsfesten Hochspannungsteil 34, welches drei oder mehr Umrichter 35 speist, gebildet. Die Energieversorgung 5 wird ihrerseits über die Zugsammelschiene gespeist, welche in der Zeichnung nicht dargestellt ist. Die drei Umrichter versorgen jeweils zwei Klimatisierungsmodule 4 mit Betriebsspannung. Die Regelungsvorrichtung 6 ist modular aufgebaut und ist durch eine Bedieneinheit 36 zur Einstellung der Betriebsart und der gewünschten Raumklimaparameter und durch drei Regler 37 gebildet. Der Betrieb von jeweils zwei Klimatisierungsmodulen 4 wird in dem gezeigten Ausführungsbeispiel von einem Regler 37 geregelt. Bei Ausfall einzelner Regler 37 oder der Bedieneinheit 36 wird ein Notbetrieb der Klimatisierungsmodule 4 sichergestellt und zwar durch forcierten Betrieb der Module unter Einhaltung der Sicherheitsfunktionen. Die Regelungsvorrichtung 6 ist in der Lage die Betriebsstundenzahl der einzelnen Klimatisierungsmodule 4 zu erfassen und untereinander auszugleichen, so daß jedes Klimatisierungsmodul 4 der Klimatisierungsvorrichtung eine stets annähernd gleiche Betriebsstundenzahl aufweist. Die Regelungsvorrichtung 6 schaltet im Teillastbetrieb einzelne Klimatisierungsmodule ab.

## Patentansprüche

1. Klimatisierungsvorrichtung (1), insbesondere zur Klimatisierung von Fahrgasträumen (2) eines Schienenfahrzeugs (3), mit mehreren zu einer Gruppe zusammengefaßten Klimatisierungsmodulen (4), die jeweils für sich in einer Haltevorrichtung (52) austauschbar angeordnet sind und ein Gehäuse (7) mit einem darin aufgenommenen Kältemittelkreislauf umfassen, bestehend aus einem elektrisch angetriebenen Kompressor (54), einer Drosseleinrichtung, einem Verdampfer (55) und einem Verflüssiger (56) und zwei in dem Gehäuse (7) voneinander getrennten Luftführungskanälen (15, 15'), wobei in dem ersten Luftführungskanal (15) der Verdampfer (55) und in dem zweiten Luftführungskanal (15') der Verflüssiger (56) angeordnet ist und jedem Luftführungskanal (15, 15') ein Gebläse (57, 57') zugeordnet ist und in dem Gehäuse (7) Wandöffnungen (10, 10') vorgesehen sind, die jeweils den Eintritt und den Austritt der Luftführungskanäle (15, 15') bilden, wobei die ersten Luftführungskanäle (15) aller Klimatisierungsmodule (4) der Gruppe fluidisch parallel zwischen einem Mischluftkanal (23) für Umluft/Frischluft und einem Zuluftkanal (25) für die Zuluft (13) zu den Fahrgasträumen (2) angeordnet und an Verbindungsöffnungen (14, 14') dieser, durch Einschieben des Gehäuses (7) in die Haltevorrichtung (52) anschließbar sind und eine Energieversorgung (5) sowie eine Regelungsvorrichtung (6) vorgesehen sind, durch die die Anzahl der Klimatisierungsmodule (4) der Gruppe selektiv betreibbar ist und an dem Gehäuse (7) eine elektrische Anschlußvorrichtung (8) vorgesehen ist.

2. Klimatisierungsvorrichtung nach Anspruch 1,
**dadurch gekennzeichnet, daß** Teile der Haltevorrichtung (52) für das Gehäuse (7) der Klimatisierungsmodule (4) als Vorrichtung für einen positionsgenauen Anschluß der Klimatisierungsmodule (4) ausgebildet ist und im eingebauten Betriebszustand der Klimatisierungsmodule (4) in der Haltevorrichtung (52) die Verbindungsöffnungen (14, 14') mit den Wandöffnungen (10, 10') dichtend verbunden sind.

3. Klimatisierungsvorrichtung nach Anspruch 1 oder 2,
**dadurch gekennzeichnet, daß** die Wandöffnungen (10, 10') an einer einzigen Gehäusewand (9) des Gehäuses (7) angeordnet sind.

4. Klimatisierungsvorrichtung nach Anspruch 2 oder 3,
**dadurch gekennzeichnet, daß** die Vorrichtung zum positionsgenauen Anschluß im wesentlichen durch Gleitschienen (33) gebildet ist und die Klimatisierungsmodule (4) in der Haltevorrichtung (52) daran geführt sind.

5. Klimatisierungsvorrichtung nach einem der Ansprüche 1 bis 4,
**dadurch gekennzeichnet, daß** an der Haltevorrichtung (52) zumindest eine schwenkbare Montageklappe (32) zum Aus- und Einbau der Klimatisierungsmodule (4) angebracht ist und die Montageklappe (32) auf ihrer den Klimatisierungsmodulen (4) zugewandten Seite Gleitschienen zur Führung der Klimatisierungsmodule (4) trägt.

6. Klimatisierungsvorrichtung nach Anspruch 5,
**dadurch gekennzeichnet, daß** zwischen den Klimatisierungsmodulen (4) und dem Mischluftkanal (23) ein schnell tauschbares Filter (30) zur Filterung der in die Klimatisierungsmodule (4) einströmenden Mischluft (29) angeordnet ist.

7. Klimatisierungsvorrichtung nach Anspruch 6,
**dadurch gekennzeichnet, daß** an jeder Wandöffnung (10') des Klimatisierungsmoduls (4), die an den Zuluftkanal (25) anschließbar ist, eine Rückschlagklappe (31) angeordnet ist.

8. Klimatisierungsvorrichtung nach einem der Ansprüche 1 bis 7,
**dadurch gekennzeichnet, daß** die Energieversorgung (5) der Klimatisierungsmodule (4) aus einem Hochspannungsteil (34) und mehreren Umrichtern (35) gebildet ist und durch jeden Umrichter (35) mittels der elektrischen Anschlußvorrichtung (8) bis zu vier Klimatisierungsmodule (4) gespeist sind.

9. Klimatisierungsvorrichtung nach einem der Ansprüche 1 bis 8,
**dadurch gekennzeichnet, daß** die Regelungsvorrichtung (6) durch eine Bedieneinheit (36) und mehrere Regler (37) gebildet ist.

10. Klimatisierungsvorrichtung nach einem der Ansprüche 1 bis 9,
**dadurch gekennzeichnet, daß** die Klimatisierungsmodule (4) unter dem Boden (18) eines Eisenbahnwagens (19) angeordnet sind.

11. Klimatisierungsvorrichtung nach einem der Ansprüche 1 bis 9,
**dadurch gekennzeichnet, daß** die Klimatisierungsmodule (4) auf oder unter dem Dach (20) der Wagenenden (21) eines Eisenbahnwagens (19) angeordnet sind.

12. Klimatisierungsvorrichtung nach einem der Ansprüche 1 bis 9,
**dadurch gekennzeichnet, daß** die Klimatisierungsmodule (4) in einem Wandschrank (22) eines Eisenbahnwagens (19) angeordnet sind.

13. Klimatisierungsvorrichtung nach einem der Ansprüche 1 bis 12,
**dadurch gekennzeichnet, daß** die Kälteleistung der Klimatisierungsmodule (4) etwa 2 kW bis 10 kW beträgt.

14. Verfahren zum Betrieb einer Klimatisierungsvorrichtung nach den Ansprüchen 1 bis 13,
**dadurch gekennzeichnet, daß** die Regelungsvorrichtung (6) die Betriebsstundenzahl der Klimatisierungsmodule (4) erfaßt und die Betriebsstundenzahl der Klimatisierungsmodule (4) untereinander ausgleicht.

15. Verfahren zum Betrieb einer Klimatisierungsvorrichtung nach einem der Ansprüche 1 bis 13,
**dadurch gekennzeichnet, daß** die Regelungsvorrichtung (6) im Teillastbetrieb einzelne Klimatisierungsmodule (4) abschaltet.

## Claims

1. An air-conditioning device (1), in particular for air conditioning passenger compartments (2) of a rail vehicle (3), with several air-conditioning modules (4) combined in a group which are positioned in a holding device (52) in such a manner that they can be replaced and comprise a housing (7) containing a coolant circuit consisting of an electrically driven compressor (54), a throttle device, an evaporator (55) and a condenser (56) along with two air conduction ducts (15, 15') which run separately through the housing (7), the evaporator (55) being positioned in the first air conduction duct (15) and the condenser (56) being positioned in the second air conduction duct (15'), a fan (57, 57') being associated with each air conduction duct (15, 15') and wall openings (10, 10') being provided in the housing (7) which form the inlet and the outlet of the air conduction ducts (15, 15') respectively, the first air conduction ducts (15) of all the air-conditioning modules (4) in the group being positioned fluidically parallel between a mixed air duct (23) for recirculation/fresh air and an air supply duct (25) for the supply of air (13) to the passenger compartments (2) and capable of being connected to connecting openings (14, 14') in said passenger compartments (2) by inserting the housing (7) into the holding device (52), with an energy supply (5) and a control device (6) being provided by means of which the number of air-conditioning modules (4) in the group can be operated selectively, and with an electrical connection device (8) being provided on the housing (7).

2. An air-conditioning device in accordance with Claim 1,
**characterised in that**
parts of the holding device (52) for the housing (7) of the air-conditioning modules (4) are designed as a device providing a positionally accurate connection to the air-conditioning modules (4) and, when the air-conditioning modules (4) are in the fitted operating position in the holding device (52), the connecting openings (14, 14') are connected to the wall openings (10, 10') forming a seal.

3. An air-conditioning device in accordance with Claim 1 or 2,
**characterised in that**
the wall openings (10, 10') are positioned on one single wall (9) of the housing (7).

4. An air-conditioning device in accordance with Claim 2 or 3,
**characterised in that**
the device for providing a positionally accurate connection consists essentially of slide rails (33) along which the air-conditioning modules (4) run in the holding device (52).

5. An air-conditioning device in accordance with one of Claims 1 to 4,
**characterised in that**
at least one hinged mounting flap (32) for fitting and removing the air-conditioning modules (4) is fitted on the holding device (52) and that the side of the mounting flap (32) facing the air-conditioning modules (4) bears slide rails on which the air-conditioning modules (4) run.

6. An air-conditioning device in accordance with Claim 5,
**characterised in that**
a quick to replace filter (30) for filtering the mixed air (29) flowing into the air-conditioning modules (4) is positioned between the air-conditioning modules (4) and the mixed air duct (23).

7. An air-conditioning device in accordance with Claim 6,
**characterised in that**
a flap trap (31) is mounted on each wall opening (10') in the air-conditioning module (4) which can be connected to the air supply duct (25).

8. An air-conditioning device in accordance with one of Claims 1 to 7,
**characterised in that**
the energy supply (5) to the air-conditioning modules (4) consists of a high voltage component (34) and several voltage converters (35) and that each converter (35) supplies up to four air-conditioning modules (4) via the electric connection device (8).

9. An air-conditioning device in accordance with one of Claims 1 to 8,
**characterised in that**
the control device (6) consists of an operating unit (36) and several control loops (37).

10. An air-conditioning device in accordance with one of Claims 1 to 9,
**characterised in that**
the air-conditioning modules (4) are positioned under the floor (18) of the railway carriage (19).

11. An air-conditioning device in accordance with one of Claims 1 to 9,
**characterised in that**
the air-conditioning modules (4) are positioned on or under the roof (20) of the ends (21) of a railway carriage (19).

12. An air-conditioning device in accordance with one of Claims 1 to 9,
**characterised in that**
the air-conditioning modules (4) are positioned in a wall cabinet (22) in a railway carriage (19).

13. An air-conditioning device in accordance with one of Claims 1 to 12,
**characterised in that**
the cooling capacity of the air-conditioning modules (4) is approximately 2 kW to 10 kW.

14. A process for operating an air-conditioning device in accordance with one of Claims 1 to 13,
**characterised in that**
the control device (6) measures the running time of the air-conditioning modules (4) and compares the running times of the various air-conditioning modules (4).

15. A process for operating an air-conditioning device in accordance with one of Claims 1 to 13,
**characterised in that**
the control device (6) cuts off individual air-conditioning modules (4) at part load.

## Revendications

1. Dispositif de conditionnement d'air (1), en particulier pour le conditionnement d'air de compartiments voyageurs (2) d'un véhicule sur rails (3), comprenant plusieurs modules de conditionnement d'air (4) réunis en formant un groupe, lesquels modules de conditionnement d'air sont disposés à chaque fois, individuellement, dans un dispositif porteur (52) en étant remplaçables, et comprennent un boîtier (7) comprenant un circuit de liquide réfrigérant logé dans ce boîtier, lequel circuit se compose d'un compresseur (54) entraîné électriquement, d'un dispositif d'étranglement, d'un évaporateur (55) et d'un condenseur (56) et de deux conduits de guidage d'air (15, 15') séparés l'un de l'autre dans le boîtier (7), où sont disposés, dans le premier conduit de guidage d'air (15), l'évaporateur (55), et, dans le second conduit de guidage d'air (15'), le condenseur (56), un ventilateur (57, 57') étant associé à chaque conduit de guidage d'air (15, 15'), et des ouvertures de paroi (10, 10') étant prévues dans le boîtier (7), lesquelles ouvertures de paroi forment à chaque fois l'entrée et la sortie des conduits de guidage d'air (15, 15') où les premiers conduits de guidage d'air (15) de tous les modules de conditionnement d'air (4) du groupe sont disposées fluidiquement et parallèlement entre un conduit (23) d'air de mélange pour l'air de reprise / l'air frais et un conduit d'air de refoulement (25) pour l'air de refoulement (13) vers les compartiments voyageurs (2) et peuvent être raccordées à des ouvertures de communication (14, 14') de ces conduits, par l'introduction du boîtier (7) dans le dispositif porteur (52), et où il est prévu une alimentation (5) en énergie ainsi qu'un dispositif de régulation (6) au moyen duquel on peut commander sélectivement le nombre de modules de conditionnement d'air (4) du groupe et où il est prévu un dispositif de raccordement électrique (8) sur le boîtier (7).

2. Dispositif de conditionnement d'air selon la revendication 1, **caractérisé en ce que** des parties du dispositif porteur (52) pour le boîtier (7) des modules de conditionnement d'air (4) sont conçues comme un dispositif pour un raccordement précis concernant la position des modules de conditionnement d'air (4) et, dans l'état de fonctionnement des modules de conditionnement d'air (4) montés dans le dispositif porteur (52), les ouvertures de communication (14, 14') sont reliées de façon étanche aux ouvertures de paroi (10, 10').

3. Dispositif de conditionnement d'air selon la revendication 1 ou 2, **caractérisé en ce que** les ouvertures de paroi (10, 10') sont disposées sur une seule paroi (9) du boîtier (7).

4. Dispositif de conditionnement d'air selon la revendication 2 ou 3, **caractérisé en ce que** le dispositif pour le raccordement précis concernant la position est formé essentiellement par des glissières (33) et où les modules de conditionnement d'air (4) sont guidés sur ces glissières dans le dispositif porteur (52).

5. Dispositif de conditionnement d'air selon l'une quelconque des revendications 1 à 4, **caractérisé en ce qu'**au moins une trappe de montage pivotante (32) est montée sur le dispositif porteur (52) et sert au montage et au démontage des modules de conditionnement d'air (4) et la trappe de montage (32) supporte, sur son côté tourné vers les modules de conditionnement d'air (4), des glissières servant au guidage des modules de conditionnement d'air (4).

6. Dispositif de conditionnement d'air selon la revendication 5, **caractérisé en ce qu'**un filtre (30) rapidement remplaçable, servant à la filtration de l'air de mélange (29) pénétrant dans les modules de conditionnement d'air (4), est disposé entre les modules de conditionnement d'air (4) et le conduit (23) d'air de mélange.

7. Dispositif de conditionnement d'air selon la revendication 6, **caractérisé en ce qu'**un clapet antiretour articulé (31) est disposé au niveau de chaque ouverture de paroi (10') du module de conditionnement d'air (4), laquelle ouverture de paroi peut être raccordée au conduit (25) d'air neuf.

8. Dispositif de conditionnement d'air selon l'une quelconque des revendications 1 à 7, **caractérisé en ce que** l'alimentation (5) en énergie des modules de conditionnement d'air (4) est formée par un élément (34) à haute tension et par plusieurs convertisseurs (35), l'alimentation en énergie étant fournie jusqu'à quatre modules de conditionnement d'air (4) par chaque convertisseur (35), au moyen du dispositif de raccordement électrique (8).

9. Dispositif de conditionnement d'air selon l'une quelconque des revendications 1 à 8, **caractérisé en ce que** le dispositif de régulation (6) est formé par une unité de commande (36) et par plusieurs régulateurs (37).

10. Dispositif de conditionnement d'air selon l'une quelconque des revendications 1 à 9, **caractérisé en ce que** les modules de conditionnement d'air (4) sont disposés sous le plancher (18) d'une voiture de chemin de fer (19).

11. Dispositif de conditionnement d'air selon l'une quelconque des revendications 1 à 9, **caractérisé en ce que** les modules de conditionnement d'air (4) sont disposés sur ou sous le toit (20) des extrémités (21) d'une voiture de chemin de fer (19).

12. Dispositif de conditionnement d'air selon l'une quelconque des revendications 1 à 9, **caractérisé en ce que** les modules de conditionnement d'air (4) sont disposés dans une armoire murale (22) d'une voiture de chemin de fer (19).

13. Dispositif de conditionnement d'air selon l'une quelconque des revendications 1 à 12, **caractérisé en ce que** la capacité frigorifique des modules de conditionnement d'air (4) se situe entre environ 2 kW et 10 kW.

14. Procédé de fonctionnement d'un dispositif de conditionnement d'air selon l'une quelconque des revendications 1 à 13, **caractérisé en ce que** le dispositif de régulation (6) détecte le nombre d'heures de fonctionnement des modules de conditionnement d'air (4) et **en ce que** ce dispositif équilibre le nombre d'heures de fonctionnement des modules de conditionnement d'air (4) entre eux.

15. Procédé de fonctionnement d'un dispositif de conditionnement d'air selon l'une quelconque des revendications 1 à 13, **caractérisé en ce que** le dispositif de régulation (6) arrête des modules de conditionnement d'air individuels (4) en cas de fonctionnement à charge partielle.
